# EUROPEAN PATENT APPLICATION

(11) **EP 4 556 223 A1**
(43) Date of publication of application: **21.05.2025**
(21) Application number: 24213221.5
(22) Date of filing: 15.11.2024
(51) Int. Cl.: B32B 27/08, A61J 1/10, B32B 27/22, B32B 27/30

(54) **MULTILAYERED RED BLOOD CELL STORAGE CONTAINER**

(30) Priority: 17.11.2023 US 202363600521 P
(71) Applicant: Fenwal, Inc., Lake Zurich, IL 60047 (US)
(72) Inventor: SANDFORD, Craig L., Lake Zurich, 60047 (US)
(74) Representative: Maikowski & Ninnemann Patentanwälte Partnerschaft mbB

(57) **Abstract**

Containers for the storage of red blood cell compositions are disclosed. The container is a multilayered container wherein the innermost layer includes PVC and more than 30% plasticizer.

## Description

### Field of Disclosure

The present disclosure relates generally to containers for the storage of blood or blood components. More particularly, the present disclosure is directed to flexible containers that are made of at least two layers. Even more particularly, the present disclosure is directed to flexible containers wherein the innermost layer includes a composition of at least polyvinyl chloride (PVC) and a plasticizer that is more than 30% w/w of the composition.

### Background

Red blood cells are often separated from whole blood and collected for later transfusion to a patient in need of red blood cells. For example, red blood cells (hereinafter "RBCs") may be administered to a patient suffering from a loss of blood due to trauma, as a post-chemotherapy treatment, or as part of a treatment of one or more blood borne diseases, such as certain anemias and the like. Unless administered immediately after collection from a donor, RBCs must typically be stored for some period of time prior to transfusion. The storage period may be anywhere from a few days to several weeks.

Prolonged storage of RBCs can (negatively) affect RBC function. In order for the RBCs to be suitable for transfusion to the recipient, RBCs must maintain adequate cell function and metabolism. For example, RBCs must maintain an adequate concentration of adenosine triphosphate (ATP) and 2,3-DPG. In addition, the presence of lactate must not be too high in the stored RBCs. Still further, stored RBCs must have acceptably low levels of hemolysis. Typically, an acceptable level of hemolysis is below 1.0% (in, for example, the U.S.) and 0.8% (in Europe) after 42-day storage.

During storage, concentrated RBCs and the additive solutions in which they are stored are typically kept in a sealed container, usually made of a plastic material. Typically, the containers approved for the collection of whole blood and the storage of RBCs are made of polyvinyl chloride (PVC). Inasmuch as PVC can be somewhat rigid or brittle, a plasticizer is typically incorporated into the PVC. One example of a currently known and used plasticizer for medical grade PVC is di-ethylhexyl phthalate ester or DEHP. Other plasticizers that have been used with PVC or other polyolefin materials include triethylhexyltrimelliate (TEHTM), and the family of citrate esters described in U.S. Patent No. 5,026,347, the contents of which is incorporated by reference herein. In addition, epoxidized oil is often added as a secondary plasticizer to one or more of the plasticizers described above.

As reported in U.S. Patent No. 5,026,347 and other literature, such as Rock, et al. "Incorporation of plasticizer into red cells during storage," Transfusion, 1984; Horowitz et al. "Stablization of RBCs by the Plasticizer, Di(ethylhexyl)phthalate," Vox Sanquinis, 1985, certain plasticizers may have a beneficial effect on the storage life of RBCs. More particularly, plasticizers such as DEHP and the family of citrate esters have been found to suppress hemolysis of RBCs stored in containers that include such leachable plasticizers.

More recently, additional and alternative plasticizers have been suggested and employed in the manufacture of medical containers and, in particular, blood storage containers. These alternative plasticizers are devoid (or at least substantially devoid) of phthalate ester such as the above-described DEHP. Like DEHP, these alternative plasticizers are capable of suppressing hemolysis. International Patent Application No. PCT/US2012/056100, filed September 19, 2012, and incorporated by reference herein in its entirety, discloses plastic containers plasticized with 1,2-cyclohexanedicarboxylic acid diisononyl ester (or DINCH) for the storage of red blood cells with acceptable hemolysis levels. Other non-phthalate plasticizers and/or combinations thereof with hemolysis-suppressing qualities, such as di-2-ethylhexyl terephthalate (DEHT) are described in U.S. Patent No. 10,398,625, also incorporated by reference herein in its entirety. Still other non-phthalate plasticizers and plasticizer combinations are described in U.S. Patent No. 11,160,728, also incorporated by reference in its entirety.

While effective in suppressing hemolysis, many of the alternative plasticizers such as DINCH and DEHT when used in PVC-plasticized bags do not yield low enough hemolysis because the plasticizer content is too low. Increasing the plasticizer level in PVC results in the modulus decreasing. This, in turn, can affect the physical properties of the bag such as distortion of the bag at autoclave temperatures and tackiness.

Therefore, there exists a need for red blood cell storage containers that are substantially free of phthalate ester in the blood contacting surfaces of the container walls and are capable of suppressing hemolysis in red blood cells. Additionally, there exists a need for red blood cell storage containers with physical properties that maintain container integrity during sterilization and other conditions to which the container may be exposed.

### Summary

There are several aspects of the present subject matter which may be embodied separately or together in the devices, systems, and methods described and/or claimed below. These aspects may be employed alone or in combination with other aspects of the subject matter described herein, and the description of these aspects together is not intended to preclude the use of these aspects separately or the claiming of such aspects separately or in different combinations as set forth in the claims appended hereto or later amended. For purposes of this description and claims, unless otherwise expressly indicated, "blood" is intended to include whole blood and blood components, such as concentrated red cells, plasma, platelets and white cells, whether with or without anticoagulant or additives.

In one aspect, a container for storing red blood cells is provided. The container for storing red blood cells includes a container wall including an inner layer and an outer layer, wherein the inner layer defines an interior chamber of the container. The inner layer and outer layer include a composition including at least a polymer and a plasticizer wherein the plasticizer of the inner layer is at least 30% w/w of the composition of the inner layer and the plasticizer of the outer layer is less than 30% w/w of the composition of the outer layer. The red blood cell product also includes a volume of red blood cells within the interior chamber.

In another aspect, a red blood cell product is provided. The red blood cell product includes a red blood cell storage container including a container wall. The container wall includes an inner layer and an outer layer, wherein the inner layer defines an interior chamber. The inner layer and outer layer include a composition including at least a polymer and a plasticizer wherein the plasticizer of the inner layer is at least 30% w/w of the composition of the inner layer and the plasticizer of the outer layer is less than 30% w/w of the composition of the outer layer.

In another aspect, a container for storing red blood cells is provided. The container for storing red blood cells includes a container wall including an inner layer and an outer layer, wherein the inner layer defines an interior chamber of the container. The inner layer includes a composition including at least a polymer and a plasticizer, wherein the plasticizer is at least 30% w/w of the composition of the inner layer; and the outer layer includes a composition including a non-PVC polymer.

These and other aspects of the present subject are set forth in the following detailed description of the accompanying drawings.

### Brief Description of the Drawings

FIG. 1 is a plan view of an example of an RBC storage container.
FIG. 2 is a side view of the RBC storage container of FIG. 1 including a partial cross-section for illustrative purposes.
FIG. 3 is a plan view of another example of an RBC storage container.
FIG. 4 is a plan view of an example of a multilayered sheet.

### Detailed Description of the Embodiments

The embodiments disclosed herein are for the purpose of providing an exemplary description of the present subject matter. They are, however, only exemplary and not exclusive, and the present subject matter may be embodied in various forms. Therefore, specific details disclosed herein are not to be interpreted as limiting the subject matter as defined in the accompanying claims.

Disclosed herein are containers for holding whole blood or separated blood components. For example, the containers disclosed herein are containers for holding red blood cells (RBCs) and red blood cell products during a period of storage wherein the container is made of a plastic material including at least one extractable agent such as a plasticizer which is capable of suppressing hemolysis in the stored RBCs (it is understood that RBCs, as used herein, will refer to both red blood cells and red blood cell products unless otherwise specified). More particularly, the container typically is made of a plastic material such as, but not limited to, polyvinyl chloride (PVC) and at least one extractable agent. An RBC product can include concentrated RBCs that have typically been combined with an additive solution selected to maintain cell function and metabolism of the RBCs during prolonged storage (e.g., at least about 42 days and possibly even up to at least 49 and/or 56 days). The RBCs or RBC product is intended for transfusion to a patient.

Concentrated RBCs are derived from whole blood either by manual or automated separation collection techniques which will be known to those skilled in the art. RBC concentrates may include some residual amount of plasma. In one embodiment, the RBC concentrate may have most of its plasma removed as described, for example, in International Application Publication WO 2011/049709, incorporated herein by reference in its entirety.

RBC products include RBC concentrate and an additive solution. The additive solutions may be any known additive solution including Adsol (AS-1) available from Fenwal, Inc., of Lake Zurich, III. In an embodiment, suitable additive solutions include at least sodium chloride, glucose (nutrient), mannitol and adenine. For example, the additive solution includes approximately 111 mM glucose (dextrose), 154 mM sodium chloride, 41 mM mannitol, and 2.0 mM adenine. The solution may have a pH of about 5.0 and is substantially isotonic. In another embodiment, the additive solution may be generally hypotonic and typically (but not necessarily) does not include sodium chloride. The additive solution can allow for the extended storage of RBCs (in the containers described herein) for over 21 days, over 35 days, up to at least 42 days, and even up to at least 49 days, and/or 56 days.

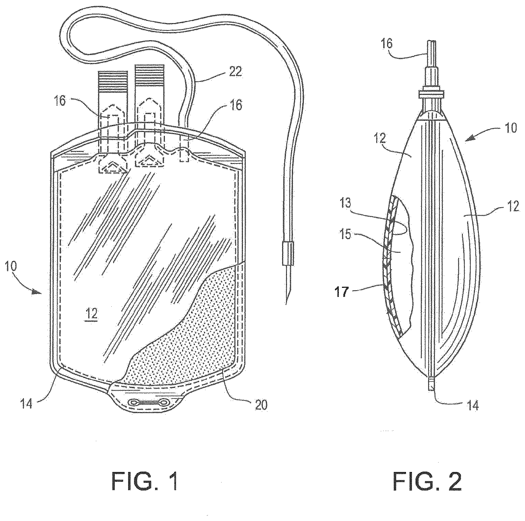

Referring to FIGS. 1 and 2, the figures show a container 10 that may be suitable for the long-term storage of RBCs, or for the collection and storage of whole blood or other blood components such as platelets and plasma. Preferably, container 10 is configured for storing RBCs or an RBC product and is made of a plasticized polymeric material configured to suppress hemolysis. For example, the level of hemolysis of RBCs within container 10 can be below 1.0% or below 0.8% and more preferably no more than and more preferably below 0.5%. Containers for storing RBCs may also be permeable to oxygen or at least semi-permeable to oxygen.

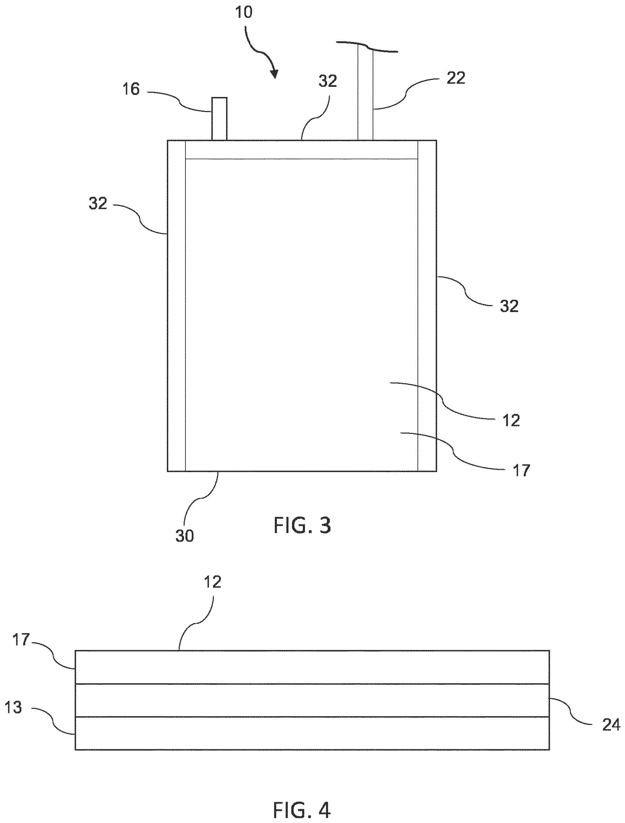

Container 10 may include one or more plasticized polymeric sheets, which form container walls 12. In one embodiment, as shown in FIGS. 1 and 2, two sheets made of a composition including a plasticized polymeric material are brought together and sealed along their peripheries 14 to form container 10. Alternatively, as shown in FIG. 3, a single sheet made of a composition including a plasticized polymeric material can be folded at a folding edge 30 and sealed to itself along the non-folded edges 32 to form container 10. Container 10 can be formed, for example, with adhesive or by heat sealing (e.g., RF). Other ways of making container 10 will be known to those of skill in the art and are within the scope of the present disclosure.

As shown in FIG. 2, container wall 12 is multi-layered and includes at least an inner layer 13 and an outer layer 17. Inner layer 13 defines an interior chamber 15 for receiving whole blood or a blood component, such as RBCs 20. Accordingly, inner layer 13 is configured to contact the whole blood or blood component, such as RBCs 20.

To form container wall 12, inner layer 13 and outer layer 17 can be brought together to form a polymeric sheet. In an embodiment, inner layer 13 and outer layer 17 are formed into container wall 12 by coextrusion. In other embodiments, inner layer 13 and outer layer 17 can be attached to one another by lamination. Other suitable methods of forming a multi-layered polymeric sheet can be used without departing from the scope of the disclosure.

Inner layer 13 and outer layer 17 include a composition of at least a polymer and a plasticizer. In some embodiments, both inner layer 13 and outer layer 17 can include a composition of the same plasticized polymeric material, with each layer including differing amounts/concentrations of the same plasticizer. Alternatively, the inner layer 13 and outer layer 17 can be made of different plasticized polymeric material with differing amounts/concentrations of a plasticizer.

By using a multi-layered container wall 12, the plasticizer content in each layer can be optimized for a particular purpose. For instance, inner layer 13 can include an inner layer plasticizer optimized for hemolysis suppression while outer layer 17 can include an outer layer plasticizer optimized to impart beneficial physical properties to container 10. To optimize inner layer 13 and outer layer 17 for particular purposes, the concentration by weight (% w/w) of plasticizer of the composition of each layer can be varied. By varying the concentration by weight of plasticizer in each layer, a container 10 can suppress hemolysis and avoid detrimental physical properties such as distortion at autoclave temperatures or tackiness.

In particular, inner layer 13 includes a composition wherein the concentration by weight (% w/w) of plasticizer is higher than that in the composition of the outer layer 17. For instance, inner layer 13 can include a composition including a polymer and a plasticizer that is at least 30% w/w of the composition of the inner layer 13, and outer layer 17 can include a composition including a polymer and a plasticizer that is less than 30% w/w of the composition of the outer layer 17. In some embodiments, inner layer 13 includes a composition including a polymer and a plasticizer that is more than 30% w/w of the composition of the inner layer 13, and outer layer 17 includes a composition including a polymer and a plasticizer that is less than 30% w/w of the composition of the outer layer 17.

In an embodiment, container wall 12 can be entirely made of plasticized PVC. In other words, both inner layer 13 and outer layer 17 are made of a plasticized PVC. As described above, inner layer 13 includes a composition wherein the concentration by weight (% w/w) of plasticizer is higher than that in outer layer 17. In an example, the plasticizer of both inner layer 13 and outer layer 17 can be di-2-ethylhexyl terephthalate (DEHT) and/or 1 ,2-cyclohexanedicarboxylic acid, diisononyl ester (DINCH). In particular, the composition of inner layer 13 includes at least 30% w/w of a DEHT and/or DINCH plasticizer. More particularly, the composition of inner layer 13 includes more than 30% w/w of a DEHT and/or DINCH plasticizer. In some embodiments, the composition of inner layer 13 includes 30-50% w/w of a DEHT and/or DINCH plasticizer. Furthermore, the composition of outer layer 17 includes less than 30% w/w of a DEHT and/or DINCH plasticizer. Optionally, the plasticizer of the inner layer 13 and the outer layer 17 can be the same plasticizer of either DEHT or DINCH.

In another example, the plasticizer in the inner layer 13 can be DEHT and/or DINCH and the plasticizer of the outer layer can be any plasticizer that imparts suitable toxicology and physical properties to container 10. In particular, inner layer 13 includes at least 30% w/w of a DEHT and/or DINCH plasticizer. More particularly, inner layer 13 includes more than 30% w/w of a DEHT and/or DINCH plasticizer. Outer layer 17 can include any suitable plasticizer having less than 30% w/w of the composition of outer layer 17. For instance, outer layer 17 can include less than 30% w/w of DEHT and/or DINCH. In another example, outer layer 17 can include less than 30% w/w DEHT, DINCH, and/or BTHC. In some embodiments, outer layer 17 can include less than 30% w/w of a non-leaching or moderately leaching plasticizer, such as, but not limited to, TEHTM.

Additionally, in some embodiments, inner layer 13 can include a composition including a polymer and a blend of DEHT and/or DINCH with a secondary plasticizer. For example, inner layer 13 can include PVC plasticized with a blend of DEHT and/or DINCH with citrate. Other suitable secondary plasticizers can be used without departing from the scope of the disclosure.

Alternatively, inner layer 13 can be made of plasticized PVC and outer layer 17 can be made of a non-PVC material. For example, inner layer 13 includes a composition including PVC and at least a DEHT and/or DINCH plasticizer present in at least 30% w/w or more than 30% w/w of the inner layer 13. Outer layer 17, on the other hand, can be made of, but not limited to, one or more non-PVC polyolefin homopolymers, co-polymers or blends thereof. For instance, outer layer 17 can include polypropylene, and/or blends of polyethylene, including blends of ultra- low density polyethylene (ULDPE) and very low density polyethylene (VLDPE). Other suitable non-PVC compounds that may be used in the outer layer 17 include blends of ethylene vinylacetate (EVA). Block co-polymers such as Kraton could also be used in the outer layer 17. Exemplary formulations and/or polyolefins, polyolefin blends or other polymeric compounds which are useful, either alone or in combination, in the manufacture of containers suitable for storage of RBCs in the present disclosure are described in U.S. Pat. Nos. 5,026,347; 4,140,162; 5,849,843; and 6,579,583, all of which are incorporated herein by reference in their entireties.

Referring to FIG. 4, in some embodiments, container walls 12 can include more than two layers. For example, container wall 12 can include an intermediate layer 24 between inner layer 13 and outer layer 17. Intermediate layer 24 can include a composition including any polymeric material described herein plasticized with any suitable plasticizer, wherein the plasticizer is less than 30% w/w of the composition of intermediate layer 24. In an embodiment, intermediate layer 24 includes plasticized PVC. Container wall 12 including an inner layer 13, outer layer 17, and at least one intermediate layer 24 can be formed by coextrusion, lamination, or any other suitable method. Intermediate layer 24 may prevent plasticizer migration between the inner layer 13 and outer layer 17. Additionally, an intermediate "tie" layer 24 can be included to assist adhesion of a non-PVC outer layer 17 to a plasticized PVC inner layer 13. The intermediate "tie" layer 24 can include any composition suitable for bonding plasticized PVC to other polymers without departing from the scope of the disclosure.

In addition to the plasticizers described above, container wall 12 can include stabilizers and lubricants. Examples of stabilizers include epoxidized vegetable oils such as epoxidized soybean oil and epoxidized linseed oil. These epoxidized oils may also provide a plasticizing effect to the polymer and are generally non-leaching or marginally leaching. In some embodiments, the inner layer 13 and outer layer 17 include compositions including a plasticized PVC and epoxidized vegetable oils. Each of an inner layer 13 and outer layer 17 including a composition including at least plasticized PVC can include 3-7% w/w of epoxidized vegetable oil. For example, inner layer 13 can include a composition including at least PVC, at least 30% w/w or more than 30% w/w of a DEHT and/or DINCH plasticizer, and 3-7% w/w epoxidized vegetable oil, and outer layer 17 can include a composition including at least PVC, less than 30% w/w of a plasticizer, and 3-7% w/w of epoxidized vegetable oil.

By way of example only, and not limitation, containers of the type described herein may have a container sheet (wall) thickness of between approximately 0.010 to 0.018 inches. The sheets may include a non-smooth or any surface finish that minimizes sheet sticking. Typically, containers of the type described herein may have a container volume (i.e., interior chamber volume) of approximately 150 mL to 4 L. The containers of the present disclosure are preferably sterilized by autoclaving and such autoclavable containers may typically have a 70-85 durometer (Shore A). Empty containers such as those used for transfer packs may be radiation sterilized.

Additionally, container 10 may include one or more access ports 16 for connection with tubing 22, docking devices and the like to establish flow into and out from the interior chamber 15 of container 10. Access ports 16 and/or tubing 22 may be made of a PVC material plasticized with a mixed plasticizer system of the type described herein. Alternatively, tubing 22 and access ports 16 may be made of PVC plasticized with a single plasticizer or a blend of leaching and/or non-leaching plasticizers.

### Other Aspects

There are additional aspects to the methods and systems described herein including, without limitation, the following aspects.

Aspect 1. A container for storing red blood cells including: a container wall including an inner layer and an outer layer, wherein the inner layer defines an interior chamber of the container; and the inner layer and outer layer include a composition including at least a polymer and a plasticizer, wherein the plasticizer of the inner layer is at least 30% w/w of the composition of the inner layer and the plasticizer of the outer layer is less than 30% w/w of the composition of the outer layer.

Aspect 2. The container of Aspect 1, wherein the plasticizer of the inner layer is about 30%-50% w/w of the composition of the inner layer.

Aspect 3. The container of any one of Aspects 1 through 2, wherein the polymer is polyvinyl chloride.

Aspect 4. The container of any one of Aspects 1 through 3, wherein the plasticizer is at least one of di-2-ethylhexyl terephthalate (DEHT) or 1,2-cyclohexanedicarboxylic acid, diisononyl ester (DINCH).

Aspect 5. The container of any one of Aspects 1 through 3, wherein the plasticizer includes an inner layer plasticizer and an outer layer plasticizer, wherein the inner layer plasticizer is di-2-ethylhexyl terephthalate (DEHT) or 1,2-cyclohexanedicarboxylic acid, diisononyl ester (DINCH) and the outer layer plasticizer includes a non-leaching or moderately leaching plasticizer.

Aspect 6. The container of Aspect 5, wherein the outer layer plasticizer is triethylhexyltrimelliate (TEHTM).

Aspect 7. The container of any one of Aspects 1 through 6, wherein the inner layer and outer layer are coextruded.

Aspect 8. The container of any one of Aspects 1 through 6, wherein the inner layer and outer layer are laminated together.

Aspect 9. The container of any one of Aspects 1 through 8, wherein the container wall includes at least one intermediate layer between the inner layer and the outer layer.

Aspect 10. The container of Aspect 9, wherein the at least one intermediate layer includes a composition including at least a polymer and a plasticizer, wherein the plasticizer of the intermediate layer is less than 30% w/w of the composition of the intermediate layer.

Aspect 11. The container of any one of Aspects 3 through 10, wherein the composition of the inner layer and/or outer layer includes epoxidized vegetable oil.

Aspect 12. A red blood cell product including: a red blood cell storage container including a container wall including an inner layer and an outer layer, wherein the inner layer defines an interior chamber; the inner layer and outer layer include a composition including at least a polymer and a plasticizer, wherein the plasticizer of the inner layer is at least 30% w/w of the composition of the inner layer and the plasticizer of the outer layer is less than 30% w/w of the composition of the outer layer; and a volume of red blood cells within the interior chamber.

Aspect 13. The red blood cell product of Aspect 12, wherein the plasticizer of the inner layer is about 30%-50% w/w of the composition of the inner layer.

Aspect 14. The red blood cell product of any one of Aspects 12 through 13, wherein the polymer is polyvinyl chloride.

Aspect 15. The red blood cell product of any one of Aspects 12 through 14, wherein the plasticizer is at least one of di-2-ethylhexyl terephthalate (DEHT) or 1,2-cyclohexanedicarboxylic acid, diisononyl ester (DINCH).

Aspect 16. The red blood cell product of any one of Aspects 12 through 14, wherein the plasticizer includes an inner layer plasticizer and an outer layer plasticizer, wherein the inner layer plasticizer is di-2-ethylhexyl terephthalate (DEHT) or 1,2-cyclohexanedicarboxylic acid, diisononyl ester (DINCH) and the outer layer plasticizer includes a non-leaching or moderately leaching plasticizer.

Aspect 17. The red blood cell product of Aspect 16, wherein the outer layer plasticizer is triethylhexyltrimelliate (TEHTM).

Aspect 18. The red blood cell product of any one of Aspects 12 through 17, wherein the inner layer and outer layer are coextruded.

Aspect 19. The red blood cell product of any one of Aspects 12 through 17, wherein the inner layer and outer layer are laminated together.

Aspect 20. The red blood cell product of any one of Aspects 12 through 19, wherein the container wall includes at least one intermediate layer between the inner layer and the outer layer.

Aspect 21. The red blood cell product of Aspect 20, wherein the at least one intermediate layer includes a composition including at least a polymer and a plasticizer, wherein the plasticizer of the intermediate layer is less than 30% w/w of the composition of the intermediate layer.

Aspect 22. The red blood cell product of any one of Aspects 14 through 21, wherein the composition of the inner layer and/or outer layer includes epoxidized vegetable oil.

Aspect 23. The red blood cell product of any one of Aspects 12 through 22 wherein the level of hemolysis of the red blood cells within the interior chamber is below 0.5% after at least 42 days of storage.

Aspect 24. The red blood cell product of any one of Aspects 12 through 23 wherein the red blood cells are concentrated red blood cells.

Aspect 25. A container for storing red blood cells including: a container wall including an inner layer and an outer layer, wherein the inner layer defines an interior chamber of the container; the inner layer includes a composition including at least a polymer and a plasticizer, wherein the plasticizer is at least 30% w/w of the composition of the inner layer; and the outer layer includes a composition including a non-PVC polymer.

Aspect 26. The container of Aspect 25, wherein the plasticizer of the inner layer is about 30%-50% w/w of the composition of the inner layer.

Aspect 27. The container of any one of Aspects 25 through 26, wherein the polymer of the composition of the inner layer is polyvinyl chloride.

Aspect 28. The container of any one of Aspects 25 through 27, wherein the plasticizer is at least one of di-2-ethylhexyl terephthalate (DEHT) or 1,2-cyclohexanedicarboxylic acid, diisononyl ester (DINCH).

Aspect 29. The container of any one of Aspects 25 through 28, wherein the inner layer and outer layer are coextruded.

Aspect 30. The container of any one of Aspects 25 through 28, wherein the inner layer and outer layer are laminated together.

Aspect 31. The container of any one of Aspects 25 through 30, wherein the container wall includes at least one intermediate layer between the inner layer and the outer layer.

Aspect 32. The container of any one of claims 25 through 31, wherein the composition of the inner layer and/or outer layer includes epoxidized vegetable oil.

It will be understood that the embodiments and examples described above are illustrative of some of the applications or principles of the present subject matter. Numerous modifications may be made by those skilled in the art without departing from the spirit and scope of the claimed subject matter, including those combinations of features that are individually disclosed or claimed herein. For these reasons, the scope hereof is not limited to the above description but is as set forth in the following claims, and it is understood that the claims may be directed to the features thereof, including as combinations of features that are individually disclosed or claimed herein.

## Claims

1. A container for storing red blood cells comprising:
a container wall including an inner layer and an outer layer, wherein the inner layer defines an interior chamber of the container; and
the inner layer and outer layer comprise a composition including at least a polymer and a plasticizer, wherein the plasticizer of the inner layer is at least 30% w/w of said composition of said inner layer and the plasticizer of the outer layer is less than 30% w/w of said composition of said outer layer.

2. The container of claim 1, wherein the plasticizer of the inner layer is about 30%-50% w/w of said composition of said inner layer.

3. The container of any one of claims 1-2, wherein the polymer is polyvinyl chloride.

4. The container of any one of claims 1-3, wherein the plasticizer is at least one of di-2-ethylhexyl terephthalate (DEHT) or 1,2-cyclohexanedicarboxylic acid, diisononyl ester (DINCH).

5. The container of any one of claims 1-3, wherein the plasticizer includes an inner layer plasticizer and an outer layer plasticizer, wherein said inner layer plasticizer is di-2-ethylhexyl terephthalate (DEHT) or 1,2-cyclohexanedicarboxylic acid, diisononyl ester (DINCH) and said outer layer plasticizer comprises a non-leaching or moderately leaching plasticizer.

6. The container of claim 5, wherein the outer layer plasticizer is triethylhexyltrimelliate (TEHTM).

7. The container of any one of claims 1-6, wherein the inner layer and outer layer are coextruded.

8. The container of any one of claims 1-6, wherein the inner layer and outer layer are laminated together.

9. The container of any one of claims 1-8, wherein the container wall includes at least one intermediate layer between the inner layer and the outer layer.

10. The container of claim 9, wherein the at least one intermediate layer comprises a composition including at least a polymer and a plasticizer, wherein the plasticizer of the intermediate layer is less than 30% w/w of the composition of the intermediate layer.

11. The container of any one of claims 3-10, wherein the composition of the inner layer and/or outer layer includes epoxidized vegetable oil.

12. A red blood cell product comprising:
the container of any one of claims 1-11; and
a volume of red blood cells, preferably concentrated red blood cells, within said interior chamber.

13. A container for storing red blood cells comprising:
a container wall including an inner layer and an outer layer, wherein the inner layer defines an interior chamber of the container;
the inner layer comprises a composition including at least a polymer and a plasticizer, wherein the plasticizer is at least 30% w/w, preferably about 30%-59% w/w, of said composition of said inner layer; and
the outer layer comprises a composition including a non-PVC polymer.

14. The container claim 13, wherein the plasticizer is at least one of di-2-ethylhexyl terephthalate (DEHT) or 1,2-cyclohexanedicarboxylic acid, diisononyl ester (DINCH).

15. The container of any one of claims 13-14, wherein the container wall includes at least one intermediate layer between the inner layer and the outer layer; and wherein the composition of the inner layer and/or outer layer includes epoxidized vegetable oil.
